Europäisches Patentamt

European Patent Office

Office européen des brevets

(19)

(11) Veröffentlichungsnummer: **0 308 442**
**B1**

(12) **EUROPÄISCHE PATENTSCHRIFT**

(45) Veröffentlichungstag der Patentschrift: **26.09.90**

(51) Int. Cl.⁵: **B 29 B 9/06**

(21) Anmeldenummer: **88902399.0**

(22) Anmeldetag: **16.03.88**

(86) Internationale Anmeldenummer:
**PCT/DE88/00160**

(87) Internationale Veröffentlichungsnummer:
**WO 88/06960 22.09.88 Gazette 88/21**

(54) **STRANGGRANULATOR MIT ERHÖHTER AUSNUTZUNG DER MESSER.**

(30) Priorität: **16.03.87 DE 3708452**

(43) Veröffentlichungstag der Anmeldung:
**29.03.89 Patentblatt 89/13**

(45) Bekanntmachung des Hinweises auf die
Patenterteilung:
**26.09.90 Patentblatt 90/39**

(84) Benannte Vertragsstaaten:
**BE DE FR GB IT NL**

(56) Entgegenhaltungen:
**DE-A-2 230 187**
**DE-A-2 559 541**
**FR-A-23 548 69**
**GB-A- 733 720**
**GB-A-1 167 552**

(73) Patentinhaber: **REINHARD, Michael**
**Waldstrasse 9**
**D-6117 Schaafheim (DE)**

(72) Erfinder: **REINHARD, Michael**
**Waldstrasse 9**
**D-6117 Schaafheim (DE)**

(74) Vertreter: **Bardehle, Heinz, Dipl.-Ing. et al**
**Patent- und Rechtsanwälte Bardehle-**
**Pagenberg-Dost-Altenburg-Frohwitter-Geissler**
**& Partner Postfach 86 06 20**
**D-8000 München 86 (DE)**

**Beschreibung**

Die Erfindung betrifft einen Stranggranulator, vornehmlich zum Granulieren von Kunststoffen, gemäß dem Oberbegriff des Anspruchs 1. Solch einen Stranggranulator ist aus der DE—A—2559541 bekannt.

Stranggranulatoren sind Maschinen, mit denen Stoffe bzw. Stoffflüsse, im vorliegenden Fall Stränge, in kleine Teile getrennt werden. Bei der Herstellung von Kunststoff-Formmassen dienen sie überlicherweise dazu, den Kunststoff nach dem Synthetisieren und Compoundieren in eine Form zu überführen, in der er einfach zu portionieren und abzupacken ist und von möglichst allen gängigen Maschinen weiterverarbeitet werden kann.

Aus den DE—A—25 12 899, DE—A—26 46 309 und DE—A—28 09 680 sind Granulatoren bekannt, mit denen das Granulieren von Kunststoffen im sogenannten Heißabschlag durchgeführt wird. Dabei wird Kunststoffschmelze durch eine Lochscheibe in Wasser extrudiert. Die sich bildenden Stränge werden von an der Lochschreibe umlaufenden Messern abgetrennt. Diese Granulatoren finden vornehmlich beim Granulieren von Massenkunststoffen Anwendung und liefern die dazu notwendigen Durchsatzleistungen. Hochwertige Kunststoffe, sogenannte Engineering Plastics, die oft zur Fadenbildung neigen, können so nicht zufriedenstellend granuliert werden. Für solche Aufgaben sind aus den DE—A—27 24 464 und DE—A—28 09 680 Stranggranulatoren bekannt, die vorzugsweise bei etwas geringeren Durchsatzleistungen und gefüllten und verstärkten Kunststoffen eingesetzt werden. Die Schmelze wird durch Mehrlochdüsen oder Stranggießer in ein Wasserbad oder fließendes Wasser extrudiert, und die sich durch die Abkühlung bildenden Stränge werden nach dem Zurücklegen einer Kühlstrecke der eigentlichen Granuliereinheit zugeführt. Dort werden sie durch einen Schneidrotor mit mehreren Messern an einem feststehenden Gegenmesser in die Granulate zerschnitten.

Es hat sich aber gezeigt, daß die gebräuchlichen Maschinenkonzepte einen gravierenden Nachteil aufweisen: Beim Granulieren von gefüllten, verstärkten und oft auch noch zusätzlich korrosiven Kunststoffen kommt es zu einem starken Verschleiß der Schneidkanten. Schon nach wenigen Betriebsstunden kann die Schnittqualität und damit die Granulatform so schlecht werden, daß der Austausch des verschlissenen Gegenmessers erforderlich wird, dessen Schneidkante permanent im Eingriff ist. Die Standzeiten des Schneidrotors sind in der Regel länger. Zum Wechseln der Messer müssen kontinuierliche oder sich über einen längeren Zeitraum erstreckende Prozesse unterbrochen werden, was oft zu technischen Schwierigkeiten und wirtschaftlichen Verlusten führt.

Das typische Verschleißild sind Einkerbungen an den Stellen der Schneidkanten von Schneidrotor und Gegenmesser, an denen die Stränge geschnitten werden. Dazwischen sind die Schneidkanten noch völlig intakt. Diese intakten Bereiche machen oft ca. 2/3 der gesamten Schneide aus.

Der Erfindung liegt die Aufgabe zugrunde, einen Stranggranulator zu schaffen, bei dem die Ausnutzung der Schneidkanten von Schneidrotor und Gegenmesser erhöht wird.

Die Aufgabe wird erfindungsgemäß dadurch gelöst, daß die Stränge auf der einen Seite und der Schneidrotor und das Gegenmesser auf der anderen Seite senkrecht zur Förderrichtung der Stränge und entlang der Schneidkante des Gegenmessers relativ zueinander bewegt werden.

Mit dem Granulator nach Anspruch 2 ist sichergestellt, daß die Schneidkanten über ihre gesamte Länge beim Schneiden der Stränge beansprucht und so 100%-ig ausgenutzt werden. Eine Ausführung nach Anspruch 3 ist konstruktiv sehr einfach zu realisieren, da die rotierenden Bauteile, Einzugswalzen und Schneidrotor, fest auf dem Gestell fixiert sind. Da die Zuführung auch relativ zum Stranggießer changiert, ist es hilfreich, den Einlauf der Führungsnuten zu verbreitern. Wenn wie beim Stranggranulator nach Anspruch 4 zusätzlich zur Führung auch noch die Einzugswalzen changieren, wird die Gefahr beseitigt, daß die Stränge wegen der Relativbewegung zwischen der Zuführung und den Einzugswalzen aus den Führungsnuten herauswandern. Der Stranggranulator nach Anspruch 5 unterscheidet sich von dem nach Anspruch 4 nur dadurch, daß die Zuführung fehlt. Der Stranggranulator nach Anspruch 6 hat den Vorteil, daß die Stränge auf ihrem Weg vom Stranggießer bis zu den Schneidmessern keine seitliche Auslenkung erfahren. Dafür ist allerdings die Konstruktion etwas aufwendiger. So muß der Schneidrotor axial verschiebbar sein, was besondere Anforderungen an die Lagerung und den Antrieb stellt. Auch das Gegenmesser muß senkrecht zur Förderrichtung der Stränge verschiebbar sein. Ebenfalls keine seitliche Auslenkung erfahren die Stränge bei einem Stranggranulator nach Anspruch 7 oder 8. Ein besonderer Vorteil des Stranggranulators nach Anspruch 7 liegt darin, daß das Changieren von Schneidrotor, Gegenmesser und Einzugswalzen, die ja zusammen die eigentliche Granuliereinheit bilden, konstruktiv sehr einfach zu realisieren ist. Es kann nämlich die gesamte Einheit auf dem Gestell changieren. Im Anspruch 9 sind Mechaniken aufgeführt, die zur Erzeugung der Changierbewegung geeignet sind.

Anhand von Ausführungsbeispielen soll der Erfindungsgedanke verdeutlicht werden. Es zeigen in nicht maßstäblicher Darstellung.

Fig. 1 das Prinzip der erhöhmten Nutzung der Schneidkanten,

Fig. 2a einen erfindungsgemäßen Stranggranulator nach Anspruch 3 in der Seitenansicht,

Fig. 2b einen erfindungsgemäßen Stranggranulator nach Anspruch 3 in der Draufsicht,

Fig. 2c einen Schnitt gemäß der Linie A—A in Figur 2b,

Fig. 3 einen erfindungsgemäßen Stranggranulator nach Anspruch 7 in der Seitenansicht.

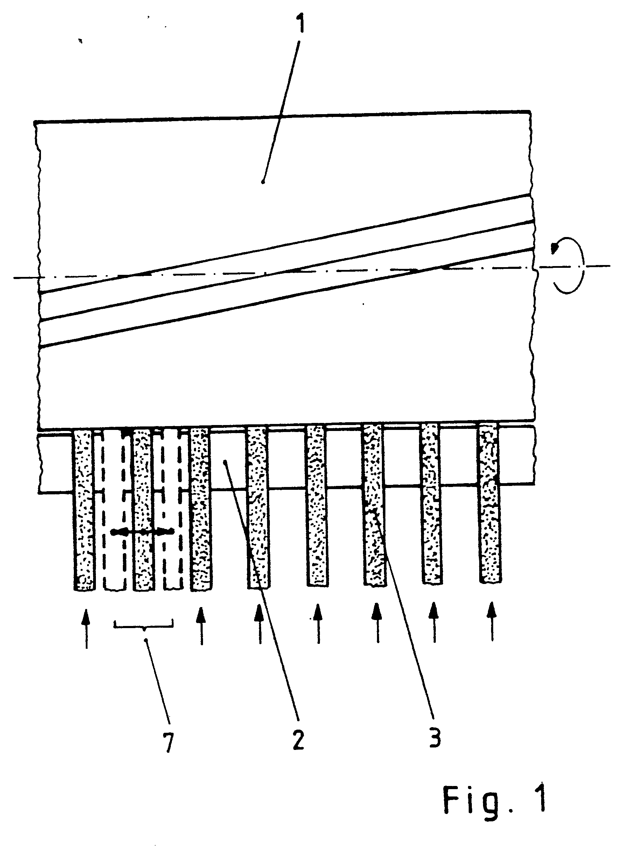

Fig. 1 zeigt den Schneidrotor (1), das Gegenmesser (2), die zu granulierenden Stränge (3) und die Breite der Changierbewegung (7). Sie soll zur prinzipiellen Erläuterung des Anspruchs 1 dienen. Im dargestellten Fall stehen der Schneidrotor (1), von der Rotationsbewegung abgesehen, und das Gegenmesser (2) fest, und die Stränge (3) changieren, es kann aber auch genauso gut umgekehrt sein. Dadurch, daß die Breite der Changierbewegung (7) entsprechend Anspruch 2 so groß ist wie der Abstand zweier benachbarter Düsenlöcher im Stranggießer bzw. Führungsnuten, werden die Schneidkanten von Schneidrotor und Gegenmesser 100%-ig ausgenutzt. Die Ansprüche 3 bis 8 stellen lediglich detailliertere Ausgestaltungen dieses Prinzips dar.

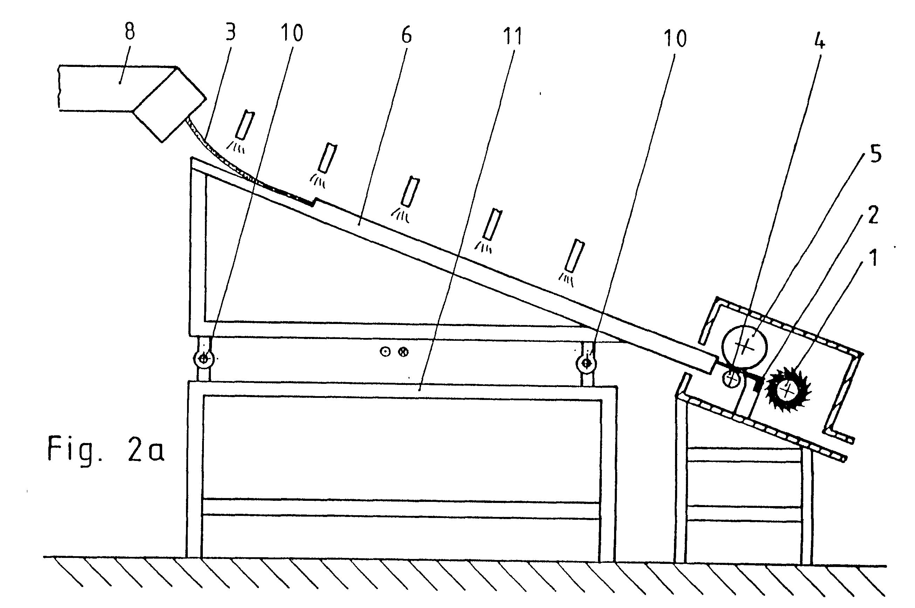

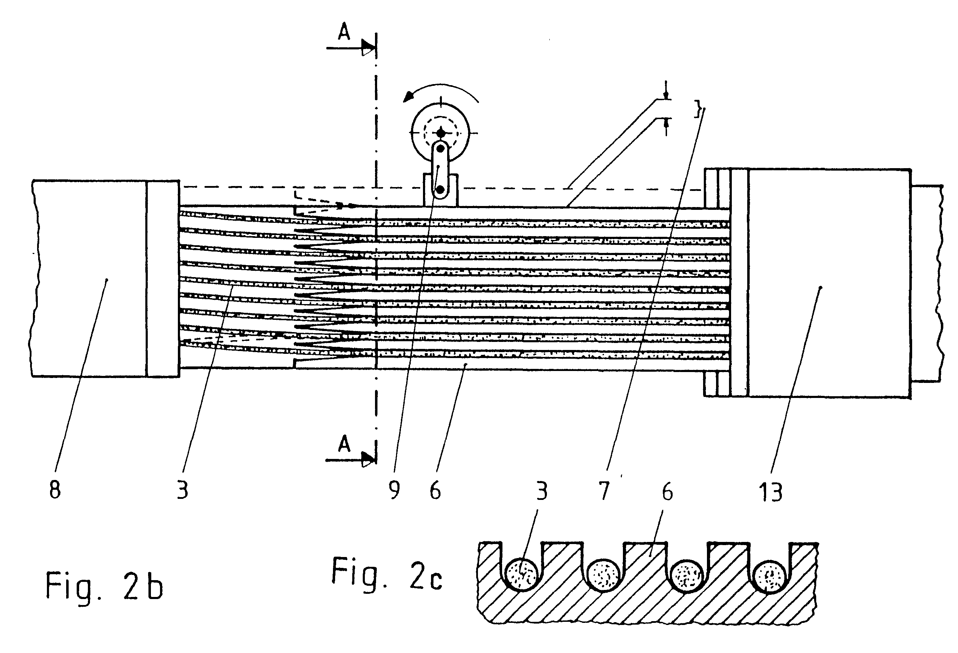

Aus Fig. 2a ist zu ersehen, wie die Stränge (3) vom Stranggiesser (8) über die Zuführung (6) der eigentlichen Granuliereinheit, bestehend aus Schneidrotor (1), Gegenmesser (2) und Einzugswalzen (4, 5), zugeführt werden. Die Zuführung ist über Längsführungen (10) mit dem Gestell (11) verbunden und changiert angetrieben von einem Kurbeltrieb, wie Fig. 2b zeigt. Ebenfalls in Fig. 2b dargestellt ist die Verbreiterung der Führungsnuten am Einlauf.

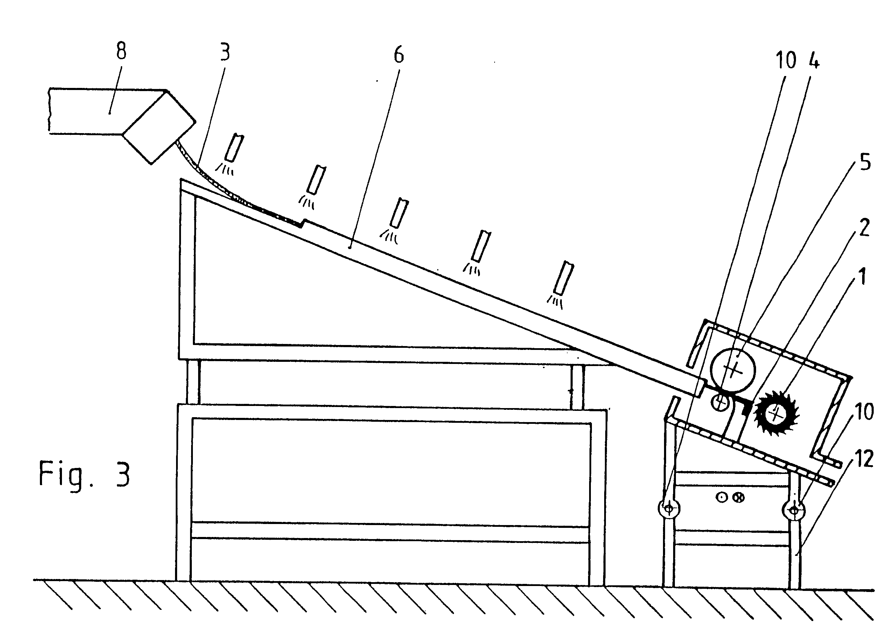

Fig. 3 zeigt im Gegensatz zu Fig. 2 a, b einen Stranggranulator, bei dem die Zuführung (6) feststeht, und dafür die Granuliereinheit, bestehend aus Schneidrotor (1), Gegenmesser (2) und Einzugswalzen changiert. Als Längsführung, die die Granuliereinheit mit dem Gestell (12) verbindet, sind auch hier wieder Rundstangen und Führungsbuchsen angedeutet, es kommt aber auch jede andere Art der Längsführung in Frage.

Bezeichnungen
1 Schneidrotor
2 Gegenmesser
3 Stränge
4 Einzugswalze (getrieben)
5 Einzugswalze
6 Zuführung (mit Längsnuten)
7 Pendelstrecke (Breite der Changierbewegung)
8 Stranggießer
9 Kurbeltrieb
10 Längsführung
11 Gestell (Zuführung)
12 Gestell (Granuliereinheit)
13 Granuliereinheit

**Patentansprüche**

1. Stranggranulator, vornehmlich zum Granulieren von Kunststoffen, bestehend aus einem Schneidrotor (1) mit mehreren Messern und einem feststehenden Gegenmesser (2), an dem die Stränge (3) geschnitten werden, Einzugswalzen (4, 5) und bei den meisten Bauarten einer zusätzlichen Zuführung mit Längsnuten (6), die gleiche Abstände zwischen den den Messern zugeführten Strängen (3) sicherstellen, dadurch gekennzeichnet,

daß die Stränge (3) auf der einen Seite und der Schneidrotor (1) und das Gegenmesser (2) auf der anderen Seite senkrecht zur Förderrichtung der Stränge (3) und entlang der Schneidkante des Gegenmessers (2) relativ zueinander bewegt werden.

2. Stranggranulator mit Zuführung (6) nach Anspruch 1, dadurch gekennzeichnet, daß die Relativbewegung eine Pendel- bzw. Changierbewegung ist, und daß die Pendelstrecke (7) mindestens so groß ist, wie der Abstand zweier benachbarter Düsenlöcher im Stranggießer (8) bzw. Führungsnuten (Mittellinie zu Mittellinie).

3. Stranggranulator mit Zuführung (6) nach den Ansprüchen 1 und 2, dadurch gekennzeichnet, daß die Zuführung (6) changiert, und die Einzugswalzen (4, 5), der Schneidrotor (1) und das Gegenmesser (2), von der Rotationsbewegung des Schneidrotors (1) abgesehen, feststehen.

4. Stranggranulator mit Zuführung (6) nach den Ansprüchen 1 und 2, dadurch gekennzeichnet, daß die Zuführung (6) und die Einzugswalzen (4, 5) changieren, und der Schneidrotor (1) und das Gegenmesser (2), von der Rotationsbewegung des Schneidrotors (1) abgesehen, feststehen.

5. Stranggranulator ohne Zuführung nach Anspruch 1, dadurch gekennzeichnet, daß die Einzugswalzen (4, 5) changieren, und der Schneidrotor (1) und das Gegenmesser (2), von der Rotationsbewegung des Schneidrotors (1) abgesehen, feststehen.

6. Stranggranulator nach Anspruch 1, dadurch gekennzeichnet, daß der Schneidrotor (1) und/oder das Gegenmesser (2) changieren, und die Einzugswalzen (4, 5) und die Zuführung (6), falls vorhanden, von den Rotationsbewegungen der Einzugswalzen (4, 5) abgesehen, feststehen.

7. Stranggranulator mit Zuführung (6) nach den Ansprüchen 1 und 2, dadurch gekennzeichnet, daß der Schneidrotor (1), das Gegenmesser (2) und die Einzugswalzen (4, 5) changieren, und die Zuführung (6) feststeht.

8. Stranggranulator ohne Zuführung nach Anspruch 1, dadurch gekennzeichnet, daß der Schneidrotor (1) und/oder das Gegenmesser (2) changieren, und die Einzugswalzen (4, 5), von den Rotationsbewegungen abgesehen, feststehen.

9. Stranggranulator nach einem der vorstehenden Ansprüche, dadurch gekennzeichnet, daß die Changierbewegung durch einen Kurbeltrieb (9), ein Exzenter-Feder-System oder ein Spindel-Mutter-System erzeugt wird.

**Revendications**

1. Dispositif de production de granulés cylindriques, principalement pour la granulation de matières plastiques, constitué d'un rotor de coupe (1) à plusieurs lames et d'une contre-lame fixe (2) sur laquelle sont coupés les boudins (3), de rouleaux d'alimentation (4, 5) et, dans la plupart des formes de construction, d'un dispositif d'allmentation supplémentaire avec des rainures longitudinales (6), qui garantissent des écartements identiques entre les boudins (3) amenés aux lames, caractérisé en ce que les boudins (3) d'une part, et le rotor de coupe (1) et la contre-lame (2) d'autre part, sont déplacés les uns par rapport aux autres perpendiculairement au sens d'avancement des boudins (3) et le long du tranchant de la contre-lame (2).

2. Dispositif de production de granulés cylindriques avec dispositif d'alimentation (6) selon la revendication 1, caractérisé en ce que le mouvement relatif est un mouvement pendulaire ou encore un mouvement de va-et-vient, et en ce que la course pendulaire (7) est au moins aussi grande que la distance entre deux trous de filières voisins dans le dispositif d'extrusion (8), ou encore entre deux rainures de guidage voisines (de ligne médiane à ligne médiane).

3. Dispositif de production de granulés cylindriques avec dispositif d'alimentation (6) selon les revendications 1 et 2, caractérisé en ce que le dispositif d'alimentation (6) se déplace en va-et-vient, et les rouleaux d'alimentation (4, 5), le rotor de coupe (1) et la contre-lame (2), exception faite du mouvement de rotation du rotor de coupe (1), restent immobiles.

4. Dispositif de production de granulés cylindriques avec dispositif d'alimentation (6) selon les revendications 1 et 2, caractérisé en ce que le dispositif d'alimentation (6) et les rouleaux d'alimentation (4, 5) se déplacent en va-et-vient, et le rotor de coupe (1) et la contre-lame (2), exception faite du mouvement de rotation du rotor de coupe (1), restent immobiles.

5. Dispositif de production de granulés cylindriques sans dispositif d'alimentation selon la revendication 1, caractérisé en ce que les rouleaux d'alimentation (4, 5) se déplacent en va-et-vient, et le rotor de coupe (1) et la contre-lame (2), exception faite du mouvement de rotation du rotor de coupe (1), restent immobiles.

6. Dispositif de production de granulés cylindriques selon la revendication 1, caractérisé en ce que le rotor de coupe (1) et/ou la contre-lame (2) se déplacent en va-et-vient, et les rouleaux d'alimentation (4, 5) et le dispositif d'alimentation (6), s'il est présent, et exception faite des mouvements de rotation des rouleaux d'alimentation (4, 5), restent immobiles.

7. Dispositif de production de granulés cylindriques avec dispositif d'alimentation (6) selon les revendications 1 et 2, caractérisé en ce que le rotor de coupe (1), la contre-lame (2) et les rouleaux d'alimentation (4, 5) se déplacent en va-et-vient, et le dispositif d'alimentation (6) reste immobile.

8. Dispositif de production de granulés cylindriques sans dispositif d'alimentation selon la revendication 1, caractérisé en ce que le rotor de coupe (1) et/ou la contre-lame (2) se déplacent en va-et-vient et les rouleaux d'alimentation (4, 5), exception faite des mouvements de rotation, restent immobiles.

9. Dispositif de production de granulés cylindriques selon l'une des revendications précédentes, caractérisé en ce que le mouvement de va-et-vient est produit par une transmission à bielle-manivelle (9), un système à ressort et excentrique, ou un système à vis et écrou.

## Claims

1. Extrusion granulator, mainly used for granulating plastics, consisting of a cutting rotor (1), with several blades, and a fixed counter-blade (2), on which the extrusions (3) are cut, draw-in rollers (4, 5) and, in most designs, an additional feed with longitudinal grooves (6), which ensure uniform distances between the extrusions (3) fed to the blades, characterised in that the extrusions (3) on one side, and the cutting rotor (1) and counter-blade (2) on the other side, are moved relatively to each other perpendicularly to the direction of feed of the extrusions (3) and along the cutting edge of the counter-blade (2).

2. Extrusion granulator with feed (6) according to Claim 1, characterised in that the relative movement is a pendulum or changing movement, and in that the pendulum section (7) is at least as great as the distance between two adjacent jet holes in the extruder (8) and guide grooves (centerline to centerline).

3. Extrusion granulator with feed (6) according to Claims 1 and 2, characterized in that the feed (6) changes position and the draw-in rollers (4, 5), the cutting rotor (1) and the counter-blade (2) are fixed, apart from the rotary movement of the cutting rotor (1).

4. Extrusion granulator with feed (6) according to Claims 1 and 2, characterised in that the feed (6) and the draw-in rollers (4, 5) change position, and the cutting rotor (1) and counter-blade (2) are fixed, apart from the rotary movement of the cutting rotor (1).

5. Extrusion granulator without feed, according to Claim 1, characterised in that the draw-in rollers (4, 5) change position, and the cutting rotor (1) and the counter-blade (2) are fixed, apart from the rotary movement of the cutting rotor (1).

6. Extrusion granulator according to Claim 1, characterised in that the cutting rotor (1) and/or the counter-blade (2) change position, and the draw-in rollers (4, 5) and feed (6), if provided, are fixed, apart from the rotary movements of the draw-in rollers (4, 5).

7. Extrusion granulator with feed (6), according to Claims 1 and 2, characterised in that the cutting rotor (1), the counter-blade (2) and the draw-in rollers (4, 5) change position, and the feed (6) is fixed.

8. Extrusion granulator without feed, according to Claim 1, characterised in that the cutting rotor (1) and/or the counterblade (2) change position, and the draw-in rollers (4, 5) are fixed, apart from the rotary movements.

9. Extrusion granulator according to one of the preceding Claims, characterised in that the changing movement is generated by a crank gear (9), an eccentric spring system or a spindel-nut system.

Fig. 1

Fig. 2a

EP 0 308 442 B1

A

A

8　　3

9　6　　3　7　6　13

Fig. 2b

Fig. 2c

EP 0 308 442 B1

Fig. 3